(19) Europäisches Patentamt
European Patent Office
Office européen des brevets

(11) Publication number: **0 345 094 B1**

(12) **EUROPEAN PATENT SPECIFICATION**

(45) Date of publication of patent specification: **26.07.95**

(51) Int. Cl.[6]: **C08L 81/02**, C08L 23/00

(21) Application number: **89305611.9**

(22) Date of filing: **02.06.89**

The file contains technical information submitted after the application was filed and not included in this specification

(54) **Polyphenylene sulfide composition.**

(30) Priority: **02.06.88 JP 136288/88**

(43) Date of publication of application:
**06.12.89 Bulletin 89/49**

(45) Publication of the grant of the patent:
**26.07.95 Bulletin 95/30**

(84) Designated Contracting States:
**CH DE FR GB IT LI**

(56) References cited:

**PATENT ABSTRACTS OF JAPAN, vol. 8, no. 232 (C-248)[1669], 25th October 1984; & JP-A-59 113 055 (DAINIPPON INK KAGAKU KOGYO K.K.) 29-06-1984**

**WPIL, FILE SUPPLIER, abstract no. AN=86-110414, Derwent Publications Ltd, London, GB; & JP-A-61 53 356 (DAINIPPON INK) 17-03-1986**

(73) Proprietor: **TORAY INDUSTRIES, INC.**
**2-1, Nihonbashi Muromachi 2-chome**
**Chuo-ku**
**Tokyo (JP)**

(72) Inventor: **Kadoi, Sho**
**Toray Shataku 141**
**1 Yushudai Higashi 3-chome**
**Ichihara-shi**
**Chiba (JP)**
Inventor: **Shimasaki, Norio**
**2 Mizusato 2-chome**
**Nakagawa-ku**
**Nagoya-shi**
**Aichi (JP)**

(74) Representative: **Geering, Keith Edwin et al**
**REDDIE & GROSE**
**16 Theobalds Road**
**London WC1X 8PL (GB)**

**EP 0 345 094 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a polyphenylene sulfide (hereinafter referred to as "PPS") composition having excellent impact characteristics, melt flowability and flexibility.

As polyphenylene sulfide resins having improved impact characteristics, there can be mentioned a composition prepared by incorporating into PPS an appropriate amount of an epoxy group-containing α-olefinic copolymer comprising an α-olefin and a glycidyl ester of an α,β-unsaturated acid, as proposed in JP-A-58-154757, and a composition prepared by incorporating an appropriate amount of an α-olefinic copolymer comprising an α-olefin and a glycidyl ester of an α,β-unsaturated acid into a polyphenylene sulfide which has been subjected to a specific treatment, as disclosed in JP-A-62-153343, 62-153344 and 62-153345.

Compositions prepared by incorporating various elastomers into PPS are disclosed in JP-A-60-120753, 59-113055, 58-27740, 56-118456 and 56-118449.

Among the foregoing known compositions, none of the compositions comprising elastomers provides a satisfactory improvement of the impact characteristics. As is well-known, the molecule chain of polyphenylene sulfide is relatively inactive, and therefore, if any ordinary elastomer is merely incorporated in polyphenylene sulfide, since the affinity of the elastomer with polyphenylene sulfide is poor, satisfactory impact characteristics cannot be obtained.

In the composition prepared by incorporating an olefinic copolymer comprising an α-olefin and a glycidyl ester of an α,β-unsaturated acid into polyphenylene sulfide, the impact characteristics are improved, and where this olefinic copolymer is incorporated in polyphenylene sulfide which has been subjected to a specific deionizing treatment, the impact characteristics are remarkably improved. Nevertheless, when this olefinic copolymer comprising an α-olefin and a glycidyl ester of an α,β-unsaturated acid is incorporated, the melt viscosity of PPS rises, and the serious problems arise of reduction of the moldability inherently possessed by PPS, and of poor flexibility of the composition.

Therefore, a primary object of the present invention is to provide a PPS composition which has not only good impact characteristics but also good moldability (represented by flowability) and flexibility.

In accordance with the present invention, there is provided a polyphenylene sulfide composition comprising (A) polyphenylene sulfide, (B) copolymer of α-olefin with glycidyl ester of α,β-unsaturated acid, said polymer containing 0.1-30 wt.% of epoxy group, and (C) at least one elastomer which is free of acid anhydride groups and selected from ethylene/propylene copolymers, ethylene/butene copolymers, ethylene/propylene/diene copolymers, hydrogenated styrene/butadiene/styrene block copolymers, and copolymers of ethylene with monomer selected from acrylic acid, methacrylic acid and alkyl esters and metal salts thereof.

The polyphenylene sulfide (PPS) used in the present invention usually has at least 70 mole%, preferably at least 90 mole%, of recurring units represented by the structural formula

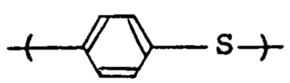

If the content of the above-mentioned recurring units is lower than 70 mole%, the heat resistance is poor.

The PPS generally includes a polymer having a relatively low molecular weight, which is typically prepared by the process disclosed in US-A-3,354,129, and a polymer having a relatively high molecular weight, which is typically prepared by the process disclosed in US-A-3,919,177. The polymerization degree of the polymer obtained by the process disclosed in US-A-3,354,129 can be increased by heating the polymer in an oxygen atmosphere after the polymerization or heating the polymer in the presence of a crosslinking agent such as a peroxide. Any of the PPS prepared according to the known processes can be used in the present invention, but a substantially linear polymer having a relatively high molecular weight, which is typically prepared according to the process disclosed in US-A-3,919,177, is preferable because the effects of the present invention are conspicuous and the toughness of the PPS per se is excellent.

The PPS used in the present invention can comprise up to 30 mole% of recurring units represented by any of the following structural formulae:

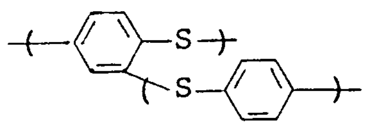, 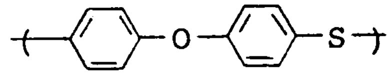

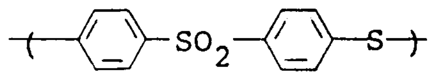, 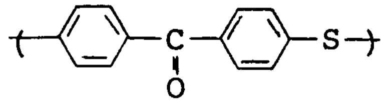,

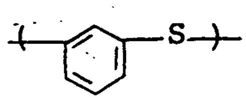, 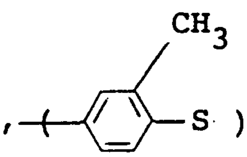 and 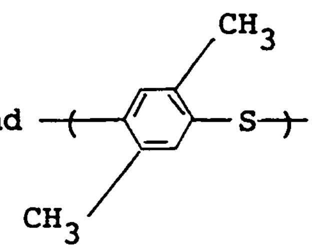.

As described above, the kind of PPS used in the present invention is not particularly critical, but in view of the affinity with an olefinic copolymer described hereinafter, preferably PPS which has been subjected to a deionizing purification treatment to remove ionic species is used. The effects of the present invention are most marked if the ion content of PPS expressed as the sodium content is not larger than 900 ppm, preferably not larger than 500 ppm. As the effective means for reducing the sodium content, there can be mentioned (a) an acid treatment, (b) a hot water treatment, and (c) an organic solvent washing treatment.

These preferred deionizing purification treatments of PPS will now be described.

The acid treatment is carried out in the following manner. The PPS is dipped in an acid or an aqueous solution of an acid, if necessary with stirring or heating. For example, where acetic acid is used, powdery PPS is immersed in an aqueous solution having a pH value of 4, which is heated at 80 to 90 °C, and the required effect can be obtained if stirring is conducted for 30 minutes. To remove residual acid or salt, the acid-treated PPS must be washed with water or warm water.

To avoid reducing the effect obtained by the acid treatment, preferably distilled water or deionized water is used for the washing.

The hot water treatment is carried out in the following manner. To obtain chemical modification by the hot water treatment, preferably the temperature of the hot water is at least 100 °C, more preferably at least 120 °C, most preferably higher than 150 °C, and especially preferably higher than 170 °C.

To avoid reducing the effect obtained by the hot water washing, preferably distilled water or deionized water is used for the hot water washing. In general, the hot water treatment is conducted by adding a predetermined amount of the PPS to a predetermined amount of water and heating the thus-prepared mixture under stirring in a pressure vessel. A large proportion of water to PPS is preferred, and in general, a bath ratio of not larger than 200 g of PPS per liter of water is selected.

The treatment is preferably carried out in an inert atmosphere to avoid deterioration of the polymer. To remove the residual components, preferably the PPS which has been subjected to the hot water treatment is washed several times with warm water.

Any organic solvents not decomposing PPS can be used for washing PPS. For example, there can be mentioned nitrogen-containing polar solvents such as N-methylpyrrolidone, dimethylformamide, dimethylacetamide, 1,3-dimethylimidazolidinone, hexamethylphosporamide, and piperazinone; sulfoxide and sulfone solvents such as dimethyl sulfoxide, dimethylsulfone, and sulfolane; ketone solvents such as acetone, methyl ethyl ketone, diethyl ketone, and acetophenone, ether solvents such as diethyl ether, dipropyl ether, dioxane, and tetrahydrofuran; halogen-containing hydrocarbon solvents such as chloroform, methylene chloride, ethylene dichloride, trichloroethylene, perchloroethylene, monochloroethane, dichloroethane, tetrachloroethane, perchloroethane, and chlorobenzene; alcohol and phenol solvents such as methanol, ethanol, propanol, butanol, pentanol, ethylene glycol, propylene glycol, phenol, cresol, polyethylene glycol, and polypropylene glycol; and aromatic hydrocarbon solvents such as benzene, toluene, and xylene. Of these organic solvents, N-methylpyrrolidone, acetone, dimethylformamide and chloroform are especially preferred. Further, these solvents can be used alone or as a mixture of two or more thereof.

The washing with the organic solvent is accomplished by immersing PPS in the organic solvent and heating or stirring as appropriate, if necessary. The temperature for the organic solvent washing is not particularly critical, and an optional temperature can be selected of from room temperature to about 300 °C. The washing efficiency is increased with increased washing temperature, but in general a satisfactory effect is obtained at a washing temperature of from room temperature to 150 °C.

Further, the washing can be carried out under pressure at a temperature higher than the boiling point of the organic solvent in a pressure vessel. The washing time is not particularly critical, and for a batchwise washing, a satisfactory effect is generally obtained if the washing is conducted for at least 5 minutes. Alternatively, the washing can be performed in a continuous manner.

Organic solvent washing on its own is satisfactory, but to further enhance the effects of the present invention, preferably the organic solvent washing is combined with water washing or warm water washing. When a high-boiling-point organic solvent such as N-methylpyrrolidone is used, the residual organic solvent can be easily removed by washing with water or warm water after the organic solvent washing, and preferably distilled water or deionized water is used for this washing.

In the present invention, a satisfactory effect can be obtained by carrying out the above-mentioned acid treatment or hot water treatment alone, but a method can be adopted in which the acid treatment is first carried out and the hot water treatment is carried out thereafter, or a method can be adopted in which the hot water treatment is first carried out and then the acid treatment is carried out.

Usual additives such as antioxidant, heat stabilizer, lubricant, crystal nucleating agent, ultraviolet absorber and colorant and a minor amount of other polymer can be added to the PPS used in the present invention, as long as the effects of the present invention are still obtained. To control the degree of crosslinking in PPS, conventional peroxide, crosslinking promoter such as metal salt of thiophosphinic acid disclosed in US-A-4,421,910, or cross-linking-preventing agent such as dialkyltin dicarboxylate or aminotriazole disclosed in US-A-4,434,122 and 4,411,853, can be added.

The copolymer (B) used in the present invention is a copolymer of α-olefin with glycidyl ester of α,β-unsaturated acid.

As the α-olefin, there can be mentioned ethylene, propylene and butene-1. The glycidyl ester of the α,β-unsaturated acid is represented by the following formula:

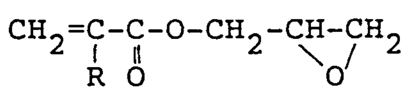

wherein R stands for a hydrogen atom or a lower alkyl group having 1 to 5 carbon atoms. As specific examples, there can be mentioned glycidyl acrylate, glycidyl methacrylate and glycidyl ethacrylate. The content of the epoxy group in the copolymer (B) is 0.1 to 30% by weight, especially 0.2 to 10% by weight. If the content of the epoxy group is lower than 0.1% by weight, the desired effects may not be obtained, and if it exceeds 30% by weight, gelation occurs on melt kneading with PPS and the extrusion stability, moldability and mechanical characteristics deteriorate.

A minor amount of other olefinic monomer such as methyl acrylate, methyl methacrylate, acrylonitrile, styrene, vinyl acetate or vinyl ether can be copolymerized in copolymer (B) used in the present invention, as long as the effects of the present invention are still obtained.

As described above, the impact characteristics can be improved in a PPS composition prepared by incorporating the copolymer (B) in PPS, but this composition has the problem that the melt viscosity is lowered and the flexibility is unsatisfactory.

In the present invention, therefore, to improve the impact characteristics and enhance the melt flowability and flexibility, elastomer (C) is incorporated as an indispensable component into PPS, together with the above-mentioned component (B).

The elastomer (C) used in the present invention preferably does not include an epoxy group; it contains no acid anhydride group and preferably has a flexural modulus not larger than 10,000 $kgf/cm^2$. The use of an elastomer containing an acid anhydride group being not according to the invention, raises the melt viscosity of the composition and reduces the moldability of the composition.

The elastomer (C) to be used in the present invention is at least one member selected from ethylene/propylene copolymers, ethylene/butene copolymers, ethylene/propylene/diene copolymers, hydrogenated styrene/butadiene/styrene block copolymers, and copolymers of ethylene with acrylic acid, methyacrylic acid and alkyl esters and metal salts thereof.

When elastomers other than the above-mentioned elastomers, such as butadiene/styrene copolymer, butadiene/acrylonitrile copolymer, polybutadiene, ethylene/vinyl acetate copolymer and plasticized polyvinyl

chloride are used, the effects of the present invention cannot be obtained.

The ethylene/propylene copolymer can have a melt flow index of 0.1 to 50 g/10 min as determined according to JIS K-7210, and preferably the ethylene content is 30 to 95% by weight, more preferably 40 to 90% by weight.

The ethylene/butene copolymer can have a melt index of 0.5 to 50 g/10 min as determined according to JIS K-7210, and preferably the ethylene content is 30 to 95% by weight, more preferably 40 to 90% by weight.

The ethylene/propylene/diene copolymer may be prepared by introducing diene compound into ethylene/propylene copolymer, and the iodine value as the factor indicating the quantity introduced of the diene compound is generally 5 to 30. As the diene compound to be introduced, there can be mentioned hexadiene, norbornadiene, and ethylidene norbornene.

The hydrogenated styrene/butadiene/styrene block copolymer can be obtained by hydrogenating a part or all of the intermediate butadiene blocks of a styrene/butadiene/styrene copolymer elastomer, for example, according to the process disclosed in the specification of US-A-3,413,323. The melt flow index of the copolymer is e.g. 0.5 to 100 g/10 min, as determined according to JIS K-7210, and the styrene content is preferably 5 to 60 mole%, more preferably 10 to 50 mole%.

As the copolymers of ethylene with acrylic acid, methacrylic acid, and alkyl esters in which the alkyl group has 1 to 5 carbon atoms, and metal salts thereof, there can be mentioned ethylene/acrylic acid ester copolymers such as ethylene/methyl acrylate copolymer, ethylene/ethyl acrylate copolymer, ethylene/propyl acrylate copolymer and ethylene/butyl acrylate copolymer, ethylene/methacrylic acid ester copolymers such as ethylene/methyl methacrylate copolymer, ethylene/ethyl methacrylate copolymer, ethylene/propyl methacrylate copolymer, and ethylene/butyl methacrylate copolymer, ethylene/acrylic acid copolymer and ethylene/methacrylic acid copolymer, and their metal salts such as Na, Zn, K, Ca and Mg salts.

Of the foregoing elastomers (C), ethylene/propylene copolymer, ethylene/butene copolymer, ethylene/acrylic acid copolymer, ethylene/methacrylic acid copolymer, ethylene/acrylic acid ester copolymer, and ethylene/methacrylic acid ester copolymer are preferable.

The amounts of PPS (A), copolymer (B), and elastomer (C) used are preferably such that the (A)/[(B) + (C)] weight ratio is from 55/45 to 99/1, more preferably from 70/30 to 95/5, and the (B)/(C) weight ratio is from 95/5 to 5/95, more preferably from 80/20 to 10/90. If the ratio of component (A) is lower than 55% by weight, the strength and rigidity of the composition may be lowered, and if the ratio of component (C) based on the sum of components (B) and (C) is lower than 5% by weight, there may be insufficient improvement of the melt flowability.

In the present invention, fibrous reinforcer and/or granular reinforcer can be incorporated, e.g. in an amount of up to 400 parts by weight per 100 parts by weight of the sum of the PPS (A), copolymer (B) and elastomer (C) according to need, although the reinforcer is not an indispensable component. If the reinforcer is incorporated in an amount of 10 to 300 parts by weight, the strength, rigidity, heat resistance, and dimensional stability can be improved.

As the fibrous reinforcer, there can be mentioned inorganic fibers such as glass, alumina, silicon carbide, ceramic, asbestos, gypsum, metal and carbon fibers.

As the granular reinforcer, there can mentioned silicates such as wollastonite, sericite, kaolin, mica, clay, bentonite, asbestos, talc and aluminum silicate, metal oxides such as alumina, silicon oxide, magnesium oxide, zirconium oxide and titanium oxide, carbonates such as calcium carbonate, magnesium carbonate and dolomite, sulfates such as calcium sulfate and barium sulfate, and glass beads, boron nitride, silicon carbide and silica. These reinforcers may have a hollow structure. A mixture of two or more of these reinforcers can be used, and these reinforcers can be preliminarily treated with a silane coupling agent or titanium coupling agent if necessary.

The means for preparing the composition of the present invention is not particularly critical, and as a typical example, there can be mentioned a method in which the PPS (A), copolymer (B), and elastomer (C), if necessary with the reinforcer, are melt-kneaded at a temperature higher than the melting point of the PPS in an extruder, and the resulting kneaded mixture is pelletized.

In general, preferably the melt-kneading temperature is higher than 280 °C, to sufficiently melt the composition, and lower than 340 °C to prevent thermal deterioration and gelation of the copolymer (B). Namely, preferably the melt-kneading temperature is 280 to 340 °C.

The composition of the present invention pelletized by the above-mentioned melt-kneading can be applied to various molding methods such as injection molding, extrusion molding, compression molding, transfer molding and blow molding, and molded articles having excellent impact characteristics and flexibility can be obtained. In particular, a tubular article obtained by extrusion molding of the composition of the present invention can have high heat and chemical resistance and high gas-barrier property and

excellent flexibility and impact resistance. Therefore, this tubular article is preferable for use as a pressure hose such as an oil hydraulic hose or a hydraulic hose, a vacuum hose, a cooler conduit hose, a fuel line tube or brake tube used in the field of automobiles, or as a liner for a control cable.

When preparing a tubular article as mentioned above from the composition of the present invention, preferably the extrusion molding is carried out under conditions such that the melt extrusion temperature is 280 to 350 °C and the shear rate of the polymer extruded from the top end of the extruder is 0.1 to 100 $sec^{-1}$.

The present invention will now be described in detail with reference to the following examples that by no means limit the scope of the invention.

Reference Example 1 (polymerization for preparation of PPS)

An autoclave was charged with 3.26 kg (25 moles) of sodium sulfide (containing 40% of crystallization water), 4 g of sodium hydroxide, 1.36 kg (about 10 moles) of sodium acetate trihydrate and 7.9 kg of N-methyl-2-pyrrolidone (hereinafter referred to as "NMP"), and the temperature was gradually raised to 205 °C while stirring to remove about 1.5 ℓ of a distilled liquid containing about 1.36 kg of water. Then 3.75 kg (25.5 moles) of 1,4-dichlorobenzene and 2 kg of NMP were added to the residual mixture, and the mixture was heated at 265 °C for 4 hours. The reaction product was washed five times with water maintained at 70 °C, and dried under reduced pressure at 80 °C for 24 hours to obtain about 2 kg of powdery PPS having a melt viscosity of about 2,500 poise (250 Pa•s) (as determined at 320 °C and a shear rate of 1,000 $sec^{-1}$).

The powdery PPS prepared in the above-mentioned manner was used in the following examples.

Example 1

About 2 kg of the PPS powder obtained in Reference Example 1 was thrown into 20 ℓ of an aqueous solution of acetic acid having a pH value of 4 and heated at 90 °C, and stirring was conducted for about 30 minutes, followed by filtration. Washing with deionized water maintained at about 90 °C was conducted until the pH value of the filtrate became 7, and drying under reduced pressure was conducted at 120 °C for 24 hours to obtain a powder.

This powder, an ethylene/glycidyl methacrylate (88/12 weight ratio) copolymer and an ethylene/propylene copolymer (Tafmer-P 180 supplied by Mitsui Petrochemical),were dry-blended at a weight ratio of 80/10/10, and the blend was melt-kneaded and pelletized by a screw extruder set at 290 to 310 °C. The melt viscosity of the obtained pellet was measured (at 320 °C and a shear rate of 1,000 $sec^{-1}$), and the results shown in Table 1 were obtained. The rise of the melt viscosity was minor.

The pellet was supplied to an injection molding machine set at 290 to 300 °C and a test piece for evaluation of the mechanical properties was molded at a mold temperature of 150 °C.

The Izod impact strength (ASTM D-256) and heat distortion temperature (ASTM D-648) determined using the obtained test piece were as shown in Table 1. The impact strength was very high and the reduction of the heat distortion temperature was minor.

The pellet was left in a melt indexer for 30 minutes, and the retention ratio of the melt flow rate (hereinafter referred to as "MFR") was measured. The results are shown in Table 1. The MFR was determined in the same manner as specified in ASTM D-1238 except that the temperature was changed to 316 °C.

Comparative Example 1

The same PPS powder as used in Example 1 was pelletized and injection-molded without incorporation of the ethylene/glycidyl methacrylate copolymer and the ethylene/propylene copolymer, and the Izod impact strength and heat distortion temperature of the obtained test piece were measured. The results are shown in Table 1. The impact strength was much lower than that of the test piece obtained in Example 1.

Comparative Example 2

Pelletization, injection molding, and evaluation were carried out in the same manner as described in Example 1, except that the PPS powder and an ethylene/glycidyl methacrylate (88/12 weight ratio) copolymer were used at a weight ratio of 80/20 instead of the PPS powder, the ethylene/glycidyl methacrylate (88/12 weight ratio) copolymer and the ethylene/propylene copolymer used at a weight ratio of

80/10/10 in Example 1. The results are shown in Table 1. The impact strength was comparable to that obtained in Example 1 of the present invention, but the melt viscosity was markedly increased and the retention ratio of MFR was very low.

Example 2

The same PPS powder and ethylene/glycidyl methacrylate (88/12 weight ratio) copolymer as used in Example 1 and an ethylene/butene copolymer (Tafmer A-4085 supplied by Mitsui Petrochemical) were dry-blended at a weight ratio of 60/20/20, and then the melt-kneading, pelletization, injection molding, and evaluation procedures were carried out in the same manner as described in Example 1. The results are shown in Table 1. Furthermore, the pellet was left in a melt indexer for 30 minutes, and the retention ratio of the MFR was measured, the results are shown in Table 1. The MFR was measured in the same manner as specified in ASTM D-1238 except that the temperature was changed to 316°C under a load of 5 kg. The increase of the viscosity due to this residence was less in the composition of the present invention, and the composition of the present invention had an excellent heat stability.

Comparative Example 3

The pelletization, injection molding, and evaluation were carried out in the same manner as described in Example 2, except that the PPS powder and an ethylene/glycidyl methacrylate (88/12 weight ratio) copolymer were used at a weight ratio of 60/40, instead of the PPS powder, the ethylene/glycidyl methacrylate (88/12 weight ratio) copolymer, and the ethylene/butene copolymer used at a weight ratio of 60/20/20 in Example 2. The results are shown in Table 1. The impact strength was comparable to that of the composition of Example 2 of the present invention, but the melt viscosity was increased and a remarkable increase of the viscosity due to the residence was observed.

Comparative Example 4

The procedures of Example 2 were repeated in the same manner except that a maleic anhydride-modified ethylene/propylene copolymer (Tafmer MP0610 supplied by Mitsui Petrochemical) was used instead of the ethylene/butene copolymer used in Example 2. The results are shown in Table 1.

The impact strength was comparable to that of the composition of Example 2 of the present invention, but the melt viscosity was increased and a remarkable increase of the viscosity due to the residence was observed.

Comparative Example 5

The kneading and molding were carried out in the same manner as described in Example 1, except that a styrene/butadiene rubber was used as the elastomer instead of the ethylene/propylene copolymer. The melt viscosity was higher than 50,000 poise (5000 Pa•s) and remarkable increases of the viscosity and gelation were observed, and thus a good injection-molded article could not be obtained.

Comparative Example 6

The kneading and molding were carried out in the same manner as described in Example 1, except that an acrylonitrile/butadiene rubber type elastomer was used as the elastomer instead of the ethylene/propylene copolymer. A violent decomposition and gas-evolution occurred at the kneading and molding steps, and thus it was impossible to perform a stable kneading and molding.

Examples 3 to 5

About 2 kg of the powder obtained in Reference Example 1 was thrown into 20 ℓ of NMP heated at 100°C, and the mixture was stirred for about 30 minutes and filtered. The recovered solid was washed with deionized water maintained at about 90°C and vacuum-dried at 120°C for 24 hours to obtain a powdery product. The obtained powdery product was used in Examples 3 to 5.

The obtained PPS powder, an ethylene/glycidyl methacrylate copolymer (88/12 weight ratio) and an ethylene/ethyl acrylate copolymer (DPDJ-6182 supplied by Nippon Unicar) (Example 3), an ethylene/propylene/diene copolymer (EPDM-3045 supplied by Mitsui Petrochemical) (Example 4) or an Na salt

of an ethylene/methacrylic acid copolymer (Himilan 1707 supplied by Mitsui Polychemical) (Example 5) were dry-blended at the ratios shown in Table 1. The dry blending, melt kneading, pelletization, and injection molding were carried out in the same manner as described in Example 1 to obtain test pieces. The results of the evaluation of the obtained test pieces and pellets are shown in Table 1. Each test piece had an excellent impact strength and the increase of the viscosity due to the residence was small.

Table 1

| Example No. | Composition: PPS Kind | Composition: PPS Amount (wt.%) | Composition: Epoxy group-containing polymer Kind | Composition: Epoxy group-containing polymer Amount (wt.%) | Composition: Elastomer Kind | Composition: Elastomer Amount (wt.%) | Izod impact strength: Notched (kg·cm/cm) | Izod impact strength: Not notched (kg·cm/$cm^2$) | Heat distortion temperature under high load (°C) | Melt viscosity (Pa·s x $10^{-1}$) | MFR retention ratio after 30 minutes' residence (%) |
|---|---|---|---|---|---|---|---|---|---|---|---|
| Ex. 1 | A*1 | 80 | X*3 | 10 | Ethylene/propylene copolymer | 10 | 61 | Above 200 | 102 | 4,200 | 90 |
| " 2 | A | 60 | X | 20 | Ethylene/butene copolymer | 20 | 69 | Above 200 | 98 | 9,100 | 74 |
| " 3 | B*2 | 70 | X | 10 | Ethylene/ethyl acrylate copolymer | 20 | 63 | Above 200 | 100 | 4,800 | 86 |
| " 4 | B | 80 | X | 5 | Ethylene/propylene/diene copolymer | 15 | 52 | Above 200 | 101 | 3,800 | 95 |
| " 5 | B | 70 | X | 20 | Na salt of ethylene/methacrylic acid copolymer | 10 | 56 | Above 200 | 101 | 6,900 | 77 |
| Comp. Ex. 1 | A | 100 | - | - | - | - | 2.2 | 19 | 110 | 2,700 | 96 |
| " 2 | A | 80 | X | 20 | - | - | 63 | Above 200 | 102 | 10,800 | 38 |
| " 3 | A | 60 | X | 40 | - | - | 69 | Above 200 | 97 | 22,000 | 5 |
| " 4 | A | 60 | X | 20 | Maleic anhydride-modified ethylene/propylene copolymer | 20 | 65 | Above 200 | 95 | 18,000 | 20 |

Note
*1 A: acid-treated PPS
*2 B: NMP-treated PPS
*3 X: ethylene/glycidyl methacrylate (88/12 weight ratio) copolymer

Example 6

The same PPS powder and ethylene/glycidyl methacrylate (88/12 weight ratio) copolymer as used in Example 1, an ethylene/butene copolymer, and glass fiber (chopped fiber having a length of 3 mm) were dry-blended at a weight ratio of 48/6/6/40, and the melt kneading, pelletization, and injection molding were carried out in the same manner as described in Example 1 to obtain a test piece. The physical properties of the test piece were determined, and the results are shown in Table 2. The melt viscosity of the obtained pellet was 10,300 poise (1030 Pa•s) (measured at 320°C and a shear rate of 1,000 $sec^{-1}$). The MFR retention ratio measured after 30 minutes residence, in the same manner as described in Example 1, was 91%.

Comparative Example 7

The melt kneading, pelletization, and injection molding were carried out in the same manner as described in Example 6, except that the PPS powder and the glass fiber were used at a weight ratio of 60/40 without incorporating the ethylene/glycidyl methacrylate copolymer and ethylene/butene copolymer used in Example 6. The physical properties of the obtained test piece were measured, and the results are shown in Table 2. The impact strength was much inferior to that of the composition of the present invention in which the ethylene/glycidyl methacrylate copolymer and ethylene/butene copolymer were incorporated.

Comparative Example 8

The melt kneading, pelletization, injection molding, and evaluation were carried out in the same manner as described in Example 6, except that the PPS powder, ethylene/glycidyl methacrylate copolymer and glass fiber were used at a weight ratio of 48/12/40, instead of the PPS powder, glycidyl methacrylate copolymer, ethylene/butene copolymer, and glass fiber, used at a weight ratio of 48/6/6/40 in Example 6. The results are shown in Table 2.

The melt viscosity of the obtained pellet was 23,000 poise (2300 Pa•s), and the MFR retention ratio after 30 minutes residence was 33%. The viscosity increase after the residence was much larger than in Example 6 of the present invention, and the composition had an inferior heat stability compared to the composition of Example 6.

Example 7

The melt kneading, pelletization and injection molding were carried out in the same manner as described in Example 6, except that an ethylene/glycidyl methacrylate copolymer (94/6 weight ratio) was used instead of the ethylene/glycidyl methacrylate (88/12 weight ratio) copolymer. The physical properties of the obtained test piece were evaluated, and the results are shown in Table 2.

Examples 8 to 10

The same PPS powder and ethylene/glycidyl methacrylate (88/12 weight ratio) copolymer as used in Example 1, glass fiber, and an ethylene/propylene copolymer (Example 8), an ethylene/propylene/diene copolymer (Example 9) or an ethylene/ethyl acrylate copolymer (Example 10) were melt-kneaded at ratios shown in Table 2 and pelletized and injection-molded in the same manner as described in Example 1, to obtain a test pieces. The results of evaluation of the physical properties of the obtained test pieces are shown in Table 2.

Example 11

The PPS (Ryton PR-06 supplied by Phillips Petroleum), an ethylene/glycidyl methacrylate (88/12 weight ratio) copolymer, glass fiber, and a styrene/ethylene/butadiene block copolymer (SEBS) were melt-kneaded at the ratio shown in Table 2 and pelletized and injection-molded in the same manner as described in Example 1 to obtain a test piece. The results of evaluation of the physical properties of the test piece are shown in Table 2.

Table 2

| Example No. | Composition: PPS Kind | Composition: PPS Amount (wt.%) | Composition: Epoxy group-containing polymer Kind | Composition: Epoxy group-containing polymer Amount (wt.%) | Composition: Elastomer Kind | Composition: Elastomer Amount (wt.%) | Composition: Amount of glass fiber (wt.%) | Izod impact strength: Notched (kg•cm/cm) | Izod impact strength: Not notched (kg•cm/cm$^2$) | Heat distortion temperature under high load (°C) |
|---|---|---|---|---|---|---|---|---|---|---|
| Ex. 6 | A *1 | 48 | X *3 | 6 | Ethylene-butene copolymer | 6 | 40 | 18 | 67 | 259 |
| " 7 | A | 48 | Y *5 | 6 | Ethylene-butene copolymer | 6 | 40 | 17 | 58 | 259 |
| " 8 | A | 42 | X | 6 | Ethylene-propylene copolymer | 12 | 40 | 19 | 68 | 256 |
| " 9 | A | 52 | X | 4 | Ethylene/propylene/diene copolymer | 4 | 40 | 16 | 55 | 260 |
| " 10 | A | 54 | X | 3 | Ethylene/ethyl acrylate copolymer | 3 | 40 | 15 | 52 | 262 |
| " 11 | C *4 | 56 | X | 9 | SEBS | 5 | 30 | 15 | 50 | 257 |
| Comp. Ex. 7 | A | 60 | - | - | - | - | 40 | 9 | 31 | 263 |
| " 8 | A | 48 | X | 12 | - | - | 40 | 18 | 68 | 258 |

Note
*1 A: acid-treated PPS
*3 X: ethylene/glycidyl methacrylate (88/12 weight ratio) copolymer
*4 C: Ryton PR-06 supplied by Phillips Petroleum
*5 Y: ethylene/glycidyl methacrylate (94/6 weight ratio) copolymer

Examples 12 to 17

The polymerization was carried out in the same manner as described in Reference Example 1, and the obtained reaction mixture was cooled to 100 °C and thrown into water while stirring, followed by filtration. The recovered product was washed five times with warm water maintained at 70 °C. The washed product and 10 ℓ of deionized water were charged into an autoclave, the autoclave was sealed, and the temperature was raised to 170 °C while stirring. This temperature was maintained for 30 minutes, and the charge in the autoclave was cooled, taken out from the autoclave, and filtered. The recovered solid was washed with deionized water at room temperature and dried under reduced pressure at 120 °C for 24 hours to obtain

about 2 kg of powdery PPS. The obtained powder was used in Examples 12 to 17.

The obtained PPS powder, an ethylene/glycidyl methacrylate copolymer (88/12 weight ratio), and an ethylene/butyl acrylate copolymer (Example 12), an ethylene/propylene copolymer (Example 13), an ethylene/butene copolymer (Example 14) optionally together with glass fiber (Examples 15 to 17 ), were mixed at ratios shown in Table 3 and melt-kneaded, pelletized, and injection-molded in the same manner as described in Example 1, to obtain test pieces. The results of evaluation of the physical properties of the obtained test pieces are shown in Table 3.

Table 3

| Example No. | Composition | | | | | | | Izod impact strength | | Heat distortion temperature under high load (°C) |
|---|---|---|---|---|---|---|---|---|---|---|
| | PPS | | Epoxy group-containing monomer | | Elastomer | | Amount of glass fiber (wt.%) | Notched (kg•cm/cm) | Not notched (kg•cm/cm²) | |
| | Kind | Amount (wt.%) | Kind | Amount (wt.%) | Kind | Amount (wt.%) | | | | |
| Ex. 12 | D *6 | 80 | X *3 | 10 | Ethylene/butyl acrylate | 10 | - | 59 | Above 200 | 103 |
| " 13 | D | 60 | X | 20 | Ethylene/propylene copolymer | 20 | - | 67 | Above 200 | 98 |
| " 14 | D | 70 | X | 10 | Ethylene/butene copolymer copolymer | 20 | - | 64 | Above 200 | 101 |
| " 15 | D | 42 | X | 6 | Ethylene/butyl acrylate copolymer | 12 | 40 | 20 | 67 | 255 |
| " 16 | D | 48 | X | 6 | Ethylene/propylene copolymer | 6 | 40 | 17 | 54 | 258 |
| " 17 | D | 48 | X | 6 | Ethylene/butene copolymer | 6 | 40 | 18 | 56 | 259 |

Note *3 X: ethylene/glycidyl methacrylate (88/12 weight ratio) copolymer

*6 D: hot water-treated PPS

Example 18

The acid-washed PPS used in Example 1, an ethylene/glycidyl methacrylate (88/12 weight ratio) copolymer, and an ethylene/propylene copolymer (Tafmer P-180) were dry-blended at a weight ratio of 80/10/10, and the blend was supplied to a twin-screw extruder having a diameter of 30 mm, melt-kneaded at 320 °C, and pelletized by a pelletizer. The obtained pellet was air-dried at 80 °C for 3 hours, supplied to an extruder heated at 295 °C, which had an opening diameter of 45 mm and an L/D ratio of 23, extruded in the form of a cylinder through a die for molding a tube, by the inner pressure method at a shear rate of 8 $sec^{-1}$, and cooled in water at 10 °C through a sizing plate to obtain a tube having a good appearance, an outer diameter of 8.0 mm, and an inner diameter of 6.0 mm. Separately, a part of the pellet was molded at a cylinder temperature of 310 °C and a mold temperature of 130 °C by using an in-line screw type injection molding machine, to obtain a test piece.

The characteristic properties of the obtained tube and test piece were as shown below. It was confirmed that a tube having a good heat resistance, softness, impact resistance, and chemical resistance, and a very high practical utility, was obtained.

Physical Properties

Flexural strength: 690 $kg/cm^2$
Flexural elastic modulus: 17,900 $kg/cm^2$
Impact resistance*: 5%
Chemical resistance**: 3%
Heat distortion temperature (18.6 $kg/cm^2$): 103 °C

## Claims

1. A polyphenylene sulfide composition comprising (A) polyphenylene sulfide, (B) copolymer of $\alpha$-olefin with glycidyl ester of $\alpha,\beta$-unsaturated acid, said polymer containing 0.1-30 wt.% of epoxy group, and (C) at least one elastomer which is free of acid anhydride groups and selected from ethylene/propylene copolymers, ethylene/butene copolymers, ethylene/propylene/diene copolymers, hydrogenated styrene/butadiene/styrene block copolymers, and copolymers of ethylene with monomer selected from acrylic acid, methacrylic acid and alkyl esters and metal salts thereof.

2. A composition according to claim 1 wherein the polyphenylene sulfide (A) has been subjected to deionizing purification treatment to remove ionic species.

3. A composition according to claim 2 wherein the polyphenylene sulfide (A) has been washed [a] with acid or hot water or organic solvent and then [b] with water.

4. A composition according to any preceding claim wherein copolymer (B) comprises ethylene/glycidyl acrylate or methacrylate copolymer.

5. A composition according to any preceding claim wherein elastomer (C) comprises ethylene/propylene copolymer, ethylene/butene copolymer or copolymer of ethylene with acrylic acid, methacrylic acid or alkyl ester thereof.

6. A composition according to any preceding claim wherein the weights of polyphenylene sulfide (A), copolymer (B) and elastomer (C) are such that the (A)/[(B) + (C)] weight ratio is from 55/45 to 99/1 and the (B)/(C) weight ratio is from 5/95 to 95/5.

*: A weight of 5.33 kg was allowed to fall on the tube from a height of 1 m. This test was conducted on 20 samples and the fracture ratio was determined.

**: A press sheet having a size of 40 mm x 40 mm x 0.2 mm was molded and immersed in lubricating oil No. 3, and was treated at 100°C for 70 hours. The increase of the weight of the sheet was determined.

7. A composition according to claim 6 wherein the (A)/[(B) + (C)] weight ratio is from 70/30 to 95/5 and the (B)/(C) weight ratio is from 10/90 to 80/20.

8. A composition according to any preceding claim which further contains at least one member selected from fibrous reinforcers and inorganic fillers.

## Patentansprüche

1. Polyphenylensulfidzusammensetzung, welche umfaßt: (A) Polyphenylensulfid, (B) ein Copolymer von $\alpha$-Olefin mit Glycidylester einer $\alpha,\beta$-ungesättigten Säure, wobei das Polymer 0,1-30 Gew.-% einer Epoxygruppe enthält, und (C) mindestens ein Elastomer, das frei von Säureanhydridgruppen ist und ausgewählt ist aus Ethylen/Propylen-Copolymeren, Ethylen/Buten-Copolymeren, Ethylen/Propylen/Dien-Copolymeren, hydrierten Styrol/Butadien/Styrol-Blockcopolymeren und Copolymeren von Ethylen mit einem Monomer, das aus Acrylsäure, Methacrylsäure und Alkylestern und Metallsalzen davon ausgewählt ist.

2. Zusammensetzung nach Anspruch 1, wobei das Polyphenylensulfid (A) zur Entfernung ionischer Species einer entionisierenden Reinigungsbehandlung unterzogen wurde.

3. Zusammensetzung nach Anspruch 2, wobei Polyphenylensulfid (A) mit [a] Säure oder heißem Wasser oder einem organischen Lösungsmittel und anschließend [b] mit Wasser gewaschen wurde.

4. Zusammensetzung nach einem der vorstehenden Ansprüche, wobei das Copolymer (B) ein Copolymer von Ethylen/Glycidylacrylat oder -methacrylat umfaßt.

5. Zusammensetzung nach einem der vorstehenden Ansprüche, wobei das Elastomer (C) ein Ethylen/Propylen-Copolymer, ein Ethylen/Buten-Copolymer oder ein Copolymer von Ethylen mit Acrylsäure, Methacrylsäure oder einem Alkylester davon umfaßt.

6. Zusammensetzung nach einem der vorstehenden Ansprüche, wobei das Gewicht des Polyphenylensulfids (A), des Copolymers (B) und des Elastomers (C) derart ist, daß das Gewichtsverhältnis (A)/[(B) + (C)] 55/45 bis 99/1 und das Gewichtsverhältnis (B)/(C) 5/95 bis 95/5 beträgt.

7. Zusammensetzung nach Anspruch 6, wobei das Gewichtsverhältnis (A)/[(B) + (C)] 70/30 bis 95/5 und das Gewichtsverhältnis (B)/(C) 10/90 bis 80/20 beträgt.

8. Zusammensetzung nach einem der vorstehenden Ansprüche, die ferner mindestens eine Verbindung enthält, die aus fasrigen Verstärkungsmaterialien und anorganischen Füllstoffen ausgewählt ist.

## Revendications

1. Composition à base de polysulfure de phénylène comprenant (A) du polysulfure de phénylène, (B) le copolymère d'une $\alpha$-oléfine avec un ester glycidylique d'un acide $\alpha,\beta$-insaturé, ledit polymère contenant de 0,1 à 30 % en poids de groupe époxy, et (C) au moins un élastomère dépourvu de groupes anhydride d'acide et choisi parmi des copolymères éthylène/propylène, des copolymères éthylène/butène, des copolymers éthylène/propylène/diène, des copolymères séquencés hydrogénés styrène/butadiène/styrène et des copolymères de l'éthylène avec un monomère choisi parmi l'acide acrylique, l'acide méthacrylique et les esters alkyliques et les sels métalliques de ces composés.

2. Composition selon la revendication 1, dans laquelle le polysulfure de phénylène (A) a été soumis à un traitement de purification par désionisation afin de supprimer les espèces ioniques.

3. Composition selon la revendication 2, dans laquelle le polysylfure de phénylène (A) a été lavé [a] avec un acide ou de l'eau chaude ou un solvant organique et puis [b] avec de l'eau.

4. Composition selon l'une quelconque des revendications précédentes, dans laquelle le copolymère (B) comprend un copolymère éthylène/acrylate ou méthacrylate de glycidyle.

**5.** Composition selon l'une quelconque des revendications précédentes, dans laquelle l'élastomère (C) comprend un copolymère éthylène/propylène, un copolymère éthylène/butène ou un copolymère de l'éthylène avec l'acide acrylique, l'acide méthacrylique ou un ester alkylique de ces composés.

**6.** Composition selon l'une quelconque des revendications précédentes, dans laquelle les proportions pondérales de polysulfure de phénylène (A), de copolymère (B) et d'élastomère (C) sont telles que le rapport pondéral (A)/[(B) + (C)] varie entre 55/45 et 99/1 et le rapport pondéral (B)/(C) varie entre 5/95 et 95/5.

**7.** Composition selon la revendication 6, dans laquelle le rapport pondéral (A)/[(B) + (C)] varie entre 70/30 et 95/5 et le rapport pondéral (B)/(C) varie entre 10/90 et 80/20.

**8.** Composition selon l'une quelconque des revendications précédentes contenant en outre au moins un élément choisi parmi des fibres de renforcement et des charges minérales.